(19) **Europäisches Patentamt**

**European Patent Office**

**Office européen des brevets**

(11) **EP 1 655 618 A1**

(12) **EUROPÄISCHE PATENTANMELDUNG**

(43) Veröffentlichungstag:
**10.05.2006 Patentblatt 2006/19**

(51) Int Cl.:
***G01S 5/14*** *(2006.01)*

(21) Anmeldenummer: **04026365.9**

(22) Anmeldetag: **05.11.2004**

(84) Benannte Vertragsstaaten:
**AT BE BG CH CY CZ DE DK EE ES FI FR GB GR HU IE IS IT LI LU MC NL PL PT RO SE SI SK TR**
Benannte Erstreckungsstaaten:
**AL HR LT LV MK YU**

(71) Anmelder: **Leica Geosystems AG**
**9435 Heerbrugg (CH)**

(72) Erfinder: **Euler, Hans-Jürgen, Dr.**
**9435 Heerbrugg (CH)**

(74) Vertreter: **Kaminski, Susanne**
**Büchel, Kaminski & Partner**
**Patentanwälte Est.**
**Austrasse 79**
**9490 Vaduz (LI)**

(54) **Verfahren zur Übermittlung von Korrekturdaten für ein satellitenbasiertes Positionierungssystem**

(57) Zum Übertragen von Korrekturen für ein satellitenbasiertes Positionierungssystem mit wenigstens einer Sendestation (5) zur Übertragung der Korrekturen an eine Empfangseinheit 1b werden eine erste Korrektionsdifferenz (7) mit einer ersten Rate und eine Korrekturinformation (8) mit einer zweiten Rate aktualisiert, wobei erste und zweite Rate unterschiedlich sind. Hierbei sind die Korrektionsdifferenzen und Korrekturinformationen jeweils Trägerphasen von Satellitensignalen zugeordnet, welche von einer Empfangseinheit empfangen werden.

Durch eine Differenzbildung kann auch die zweite Korrektionsdifferenz mit einer Aktualisierungsrate berechnet werden, welche der Aktualisierungsrate der ersten Korrektionsdifferenz (7) entspricht.

Grundlage hierfür ist die Annahme von quasi-stationären Anteilen für die dispersionsfreien Korrekturen, die eine Berechnung aus der Linearkombination von Trägerphasen und dispersiven sowie dispersionsfreien Anteilen erlaubt.

Fig. 3

EP 1 655 618 A1

**Beschreibung**

Die Erfindung betrifft ein Verfahren zum Übertragen von Korrekturen für ein satellitenbasiertes Positionierungssystem nach dem Oberbegriff des Anspruchs 1, ein Verfahren zum Empfangen von Korrekturen für ein satellitenbasiertes Positionierungssystem nach dem Oberbegriff des Anspruchs 2, ein Computerprogrammprodukt und ein Datenstrukturprodukt.

Zur Positionsbestimmung werden gegenwärtig und in Zukunft globale oder satellitenbasierte Positionierungssysteme GNSS (z.B. GPS, GLONASS, GALILEO etc.) für viele Anwendungen genutzt. Aufgrund der physikalischen Bedingungen ist die erreichbare Positionsgenauigkeit beim Empfang durch eine isoliert betriebene Station begrenzt.

Beim differentiellen GNSS erfolgt die Positionsbestimmung einer mobilen Einheit, dem sogenannten Rover, durch Datenempfang und Datenmessung zu Satelliten so wie auch der Datenempfang von Datenmessungen von wenigstens einer Referenzstation. Da die Position der Referenzstation bekannt ist und diese ebenfalls die identischen Signale der Satelliten empfängt, können durch dieses differentielle Korrekturverfahren einige Ungenauigkeiten und Fehler reduziert werden. Beispiele für solche Fehler sind ionosphärische, troposphärische oder aus den Satellitenbahnen herrührende geometrische Fehler. Durch differentielle Verfahren ist eine höhere Genauigkeit möglich als sie mit einem Rover ohne Referenzstation möglich wäre. Eine solche Station übermittelt dem Rover fortlaufend Daten aus den empfangenen Satellitensignalen.

Je nach Ausgestaltung können dies Rohdaten oder bereits aufbereitete Daten sein. In der Praxis werden Referenzstationen jedoch meist nicht für jeden Messvorgang neu installiert, sondern es erfolgt eine Abstützung auf ein ganzes Netz festinstallierter Referenzstationen, die von verschiedenen Anwendern auch gleichzeitig genutzt werden können. So können von Netzwerken entweder Netzwerk-Korrekturparameter übertragen werden oder es werden aus den Messungen der Referenzstationen im Netzwerk Daten für virtuelle Referenzstationen berechnet, die einer in der Nähe des Rovers gelegenen Station entspricht. In der US 5,899,957 werden ein Verfahren und eine Vorrichtung zum Übertragen von GPS-Korrekturdistanzen für eine ausgewählte Region beschrieben. Das Dokument enthält zudem eine breite Übersicht über den Stand der Technik zu diesem Ansatz.

Ein für eine solche Übermittlung von Daten genutzter Standard für herstellerunabhängige Datenformate wird von der Radio Technical Commission For Maritime Services (RTCM) in Alexandria, Virginia, USA festgelegt. So werden in der älteren Form (Version 2.3) des Standards zur Übertragung von Netzwerk-Korrekturparametern bzw. der Daten von virtuellen Referenzstationen bspw. die RTCM-Typen 20/21 oder 18/19 genutzt. In der moderneren und kompakteren Form (Version 3.0) finden die RTCM-Typen 1001, 1002, 1003 und 1004 Verwendung.

Ein grundlegendes Problem der Datenübertragung aus Referenzstationsnetzwerken ist das Datenvolumen. Um das Datenvolumen zu reduzieren kann ein Netzwerk nach dem Master-Auxiliary-Konzept betrieben werden, bei dem aktuelle Daten von einer ausgewählten Master-Referenz-Station direkt an den Rover übertragen werden. Die Daten der restlichen Auxiliar-Stationen des Netzwerks werden in einer zentralen Verarbeitungseinheit aufbereitet und als Korrektionsdifferenz relativ zum Signal der Master-Station übertragen.

Die Korrektionsdifferenzen für die einzelnen vom Rover empfangenen Trägerphasen der Satellitensignale enthalten verschiedene Korrekturanteile, die durch physikalische Gegebenheiten mit unterschiedlichen Zeitskalen bedingt sind. Die Trägerphasen der Satellitensignale werden dabei mit mehreren Frequenzen übertragen, die bspw. für das GPS-System mit L1 ($154 \cdot 10{,}23 \cdot 10^6$ Hz), L2 ($120 \cdot 10{,}23 \cdot 10^6$ Hz) oder L5 ($115 \cdot 10{,}23 \cdot 10^6$ Hz) bezeichnet werden. Ionosphärische Einflüsse ändern sich mit Variationen im Sekundenbereich vergleichsweise hochfrequent, wohingegen troposphärische oder geometrische Einflüsse Schwankungen im bis im Minutenbereich aufweisen. Um das zu übertragende Datenvolumen zu reduzieren, genügt es somit die Korrekturanteile für die einzelnen Einflussfaktoren mit an die Zeitskalen bzw. charakteristischen Veränderungsraten angepasst unterschiedlichen Aktualisierungsraten zu übertragen.

Geeignete Konzepte und Verfahren nach einem solchen Ansatz werden beispielsweise in "Study of a Simplified Approach in Utilizing Information from Permanent Reference Station Arrays", H.-J. Euler, C.R. Keenan, B.E. Zebhauser, G. Wübbena, Proceedings of ION GPS 2001, Salt Lake City, Utah, 11.-14. September, 2001 oder "Improvement of Positioning Performance Using Standardized Network RTK Messages", H.-J. Euler, S. Seeger, O. Zelzer, F. Takac, B. E. Zebhauser, Proceedings of ION NTM, Januar 26-28, 2004, San Diego, CA ausführlich erläutert.

Im Stand der Technik erfolgt die Aktualisierung für die Korrektionsdifferenzen der unterschiedlichen Trägerphasen mit einer identischen Rate. Diese entspricht der Aktualisierungsrate der eigentlichen Referenzstationsdaten, also beispielsweise 1 Hz für die L1- und 1 Hz für die L2-Korrektionsdifferenzen, wobei eventuell auch je nach Applikation andere, z.B. geringere oder höhere, Aktualisierungsraten verwendet werden, beispielsweise 0.5 Hz oder 1 Aktualisierung innerhalb von 2 Sekunden. Durch Linearkombinationen Ionosphärenfrei und Geometriefrei können die zeitlich unterschiedlich skalierenden Variationen entkoppelt werden. Die Korrektionsdifferenzen für L1 und L2 setzen sich dann in erster Linie aus den geometriefreien bzw. dispersiven und den ionosphärenfreien bzw. nicht-dispersiven Anteilen plus Rauschanteil zusammen:

$$\delta\Delta\Phi_{km,disp}^{j} = \frac{f_2^2}{f_2^2 - f_1^2}\delta\Delta\Phi_{km,1}^{j}$$

$$-\frac{f_2^2}{f_2^2 - f_1^2}\delta\Delta\Phi_{km,2}^{j} \tag{1}$$

$$\delta\Delta\Phi_{km,non-disp}^{j} = \frac{f_1^2}{f_1^2 - f_2^2}\delta\Delta\Phi_{km,1}^{j}$$

$$-\frac{f_2^2}{f_1^2 - f_2^2}\delta\Delta\Phi_{km,2}^{j} \tag{2}$$

wobei

$\delta\Delta\Phi_{km,disp}^{j}$ die Korrektionsdifferenz zwischen den Stationen k und m als dispersiver (Ionosphären-)Anteil für den Satelliten j,

$\delta\Delta\Phi_{km,non-disp}^{j}$ die Korrektionsdifferenz zwischen den Stationen k und m als dispersionsfreier (Geometrie-) Anteil für den Satelliten j,

$f_1$ die Frequenz der primären Trägerphase,

$f_2$ die Frequenz der sekundären Trägerphase,

$\delta\Delta\Phi_{km,1}^{j}$ die erste (L1-)Korrektionsdifferenz und

$\delta\Delta\Phi_{km,2}^{j}$ die zweite (L2-) Korrektionsdifferenz bezeichnen.

Da sich die Ionosphäre bei ionosphärischen Aktivitäten sehr schnell ändert, wird im Stand der Technik davon ausgegangen, dass auch die Korrektionsdifferenzen, z.B. die L1- und L2-Korrektionsdifferenzen, mit der notwendigerweise hohen Aktualisierungsrate der ionosphärischen Aktivität verschickt werden müssen. Hierfür wird für viele Applikationen häufig eine Aktualisierungsrate von 1 Hz als notwendig betrachtet, was formal wie folgt ausgedrückt werden kann:

$$\delta\Delta\Phi_{km,1}^{j} = f(\delta\Delta\Phi_{km,1}^{j,\ disp}) + g(\delta\Delta\Phi_{km,non-disp}^{j})$$

$$\delta\Delta\Phi_{km,2}^{j} = h(\delta\Delta\Phi_{km,disp}^{j}) + i(\delta\Delta\Phi_{km,non-disp}^{j})$$

$f()$, $g()$, $h()$, $i()$=Funktionen mit Parametern

$$f(\text{ändert sich mit } 1\,\text{Hz}) + g(\text{ändert sich mit } 0.1\,\text{Hz}) = \delta\Delta\Phi_{km,1}^{j}(\text{ändert sich mit } 1\,\text{Hz})$$

$$h(\text{ändert sich mit } 1\,\text{Hz}) + i(\text{ändert sich mit } 0.1\,\text{Hz}) = \delta\Delta\Phi_{km,2}^{j}(\text{ändert sich mit } 1\,\text{Hz})$$

Aus dieser Anforderung resultiert ein vergleichsweise hohes Datenvolumen, da alle Korrektionsdifferenzen eben mit der gleichen Rate, hier von 1 Hz, übertragen werden müssen.

Zudem resultieren jedoch noch Probleme aus speziellen geometrischen Konstellationen. Dispersive und nicht-dispersive Korrekturen lassen sich nur ermitteln wenn L1 und L2 verfügbar sind oder allgemeiner ausgedrückt, wenn 2 Trägerphasenmessungen für einen bestimmten Satelliten verfügbar sind. Derzeit entstehen Probleme bei der Verfolgung bzw. dem Tracken von Trägerphasen, z.B. von L2, für niedrigstehende Satelliten. L2-Phasen werden schneller und früher verloren bzw. bei einem aufgehenden Satelliten wird die L2-Phase später angemessen. Gerade beim Satellitenuntergang ist dieses Phänomen nachteilig, da der Empfang einer Trägerphase bereits abreisst wohingegen die andere Trägerphase noch eine gewisse Zeit länger empfangen bzw. getrackt werden kann. Mit dem Wegfall des Empfangs einer Trägerphase sind jedoch sofort keine der abgeleiteten - dispersiven und nicht-dispersiven - Korrektionsdifferenzen mehr berechenbar.

Die Aufgabe der vorliegenden Erfindung besteht in Bereitstellung eines Verfahrens zur Übertragung von Korrekturinformationen für ein satellitenbasiertes Positionierungssystem, das mit einem gegenüber dem Stand der Technik verringerten Datenvolumen arbeitet.

Eine weitere Aufgabe besteht in der Verbesserung der Signalnutzung auch bei ungünstigen geometrischen Konstellationen, z.B. in der Verlängerung der Nutzungszeit bei auf- oder untergehenden Satelliten.

Diese Aufgaben werden erfindungsgemäss durch die Verfahren oder Gegenstände der Ansprüche 1, 2 bzw. 13 und 14 sowie durch die kennzeichnenden Merkmale der Unteransprüche gelöst bzw. die Lösungen fortgebildet.

Die Erfindung betrifft ein Verfahren zum Übertragen von Korrekturen für ein satellitenbasiertes Positionierungssystem nach dem Anspruch 1, ein entsprechendes Verfahren zum Empfangen von Korrekturen nach dem Anspruch 2, ein Computerprogrammprodukt nach Anspruch 13 sowie ein für die Durchführung der Verfahren geeignetes Datenstrukturprodukt nach Anspruch 14.

Das erfindungsgemässe Konzept basiert auf einer Aussendung einer Korrektionsdifferenz als erster Korrekturinformation und einer weitren Korrekturinformation mit unterschiedlichen Aktualisierungsraten. So werden zum Beispiel Korrektionsdifferenzen für primäre Trägerphasen - beispielsweise L1 - mit einer hohen Aktualisierungsrate - beispielsweise 0.5 Hz bis 1 Hz, wie zur Zeit für ionosphärische Korrekturen konzipiert - ausgesendet. Ein Rover im Feld kann hiermit seine L1 Beobachtungen korrigieren. Korrekturinformationen, z.B. eine zweite Korrektionsdifferenz - für eine oder mehrere sekundäre Trägerphasen - beispielsweise L2 oder L5 - werden mit einer niedrigeren Aktualisierungsrate ausgesendet, wobei diese der Zeitskala von Veränderungen der dispersionsfreien bzw. geometrischen Anteile entspricht.

Hierdurch steht für die sekundäre Trägerphase die Korrektionsdifferenz nicht mehr mit der notwendigen Aktualisierungsrate zur Verfügung. Erfindungsgemäss werden aus den Korrektionsdifferenzen für die primäre Trägerphase und der Korrekturinformation rechnerisch die aktuellen Korrektionsdifferenzen für die sekundärer Trägerphase bestimmt. Hierfür wird der nicht-dispersive Anteil als quasi-stationär betrachtet, d.h. es erfolgt eine Aktualisierung auf der charakteristischen Zeitskala von Änderungen dieses Anteils. Diese Aktualisierungsrate entspricht der der sekundären Trägerphase. In den Zwischenzeiten werden aus den Linearkombinationen von Trägerphasen sowie dispersiven und dispersionsfreien Anteilen durch Differenzbildung mit dem hochfrequent aktualisierten Korrektionsdifferenzen der ersten Trägerphase die Korrektionsdifferenzen für die zweite Trägerphase berechnet. Somit stehen die Korrekturen geräteintern auch mit der höheren Aktualisierungsrate zur Verfügung.

Im Beispiel eines GPS-Systems wird die Geometrie typischerweise ca. alle 10 Sekunden bestimmt. Diese kann von der L1-Korrektionsdifferenz abgezogen werden, so dass die Ionosphärenanteile mit der hohen Updaterate von L1-Korrektionsdifferenzen übrigbleiben. Aufgrund der Dispersivität muss dieser Ionosphärenanteil auf L2 umskaliert werden und mit der berechneten Geometriekorrektionsdifferenz kombiniert werden, so dass die L2-Korrektionsdifferenzen mit der Aktualisierungsrate der L1-Korrektionsdifferenzen zur Verfügung stehen.

Hierdurch kann die Hauptfrequenz L1 noch korrigiert werden, obwohl L2 nicht oder nicht mehr verfügbar ist. Damit können geometrisch ungünstige Konstellationen, wie z.B. bei horizontnaher Positionierung eines Satelliten, länger oder früher genutzt werden.

Zudem erlaubt das Verfahren geräteintern eine Bereitstellung von Daten mit einer im wesentlichen identischen Datenübertragungsrate wie sie bei dispersiven und nicht-dispersiven Korrektionsdifferenzen verwendet werden. Jedoch ist das Datenvolumen, das von einer Sendestation übertragen werden muß, reduziert. Der übertragene Informationsinhalt ist jedoch quasi identisch.

Allerdings werden nicht alle Fehleranteile der sekundären Trägerphase übertragen. Hierin liegt aber ein Vorteil. Die primäre Trägerphase erhält eine weniger verrauschte Korrektur, was sich wieder in der Positionierung durch geringeres Positionsrauschen vorteilhaft bemerkbar macht.

Neben der Übertragung von Korrektionsdifferenzen für zwei Trägerphasen mit unterschiedlichen Raten können auch eine Korrektionsdifferenz und eine Linearkombination als Korrekturinformation übertragen werden. Dabei kann die Linearkombination z.B. dispersive und nicht-dispersive Anteile aufweisen. Es sind erfindungsgemäss jedoch auch andere Linearkombinationen mit anderen oder weiteren Komponenten verwendbar, sofern diese eine erfindungsgemässe Differenzbildung bei angenommener Quasi-Stationarität eines Teils einer Linearkombination erlauben.

Die erfindungsgemässen Verfahren und ein erfindungsgemässes Datenstrukturprodukt werden nachfolgend anhand von in der Zeichnung schematisch dargestellten Ausführungsbeispielen rein beispielhaft näher beschrieben. Im einzelnen zeigen

Fig.1    eine schematische Darstellung der Übertragung von Korrekturen mit einem Netzwerk von Referenzstationen nach dem Stand der Technik;

Fig.2    eine schematische Darstellung der Empfangsproblematik bei niedrigstehenden Satelliten;

Fig.3    eine schematische Darstellung des erfindungsgemässen Verfahrens und

Fig.4    eine schematische Darstellung von erfindungsgemässen Datenstrukturprodukten zur Nutzung bei der Durchführung eines erfindungsgemässen Verfahrens.

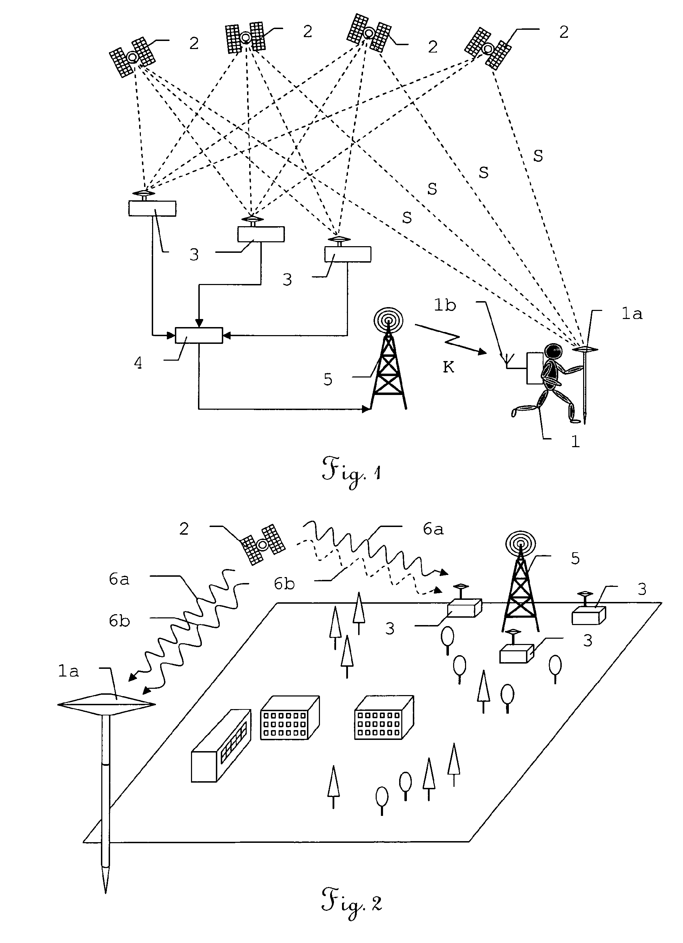

In Fig.1 wird schematisch eine Übertragung von Korrekturen K zu einer mobilen Rovereinheit 1 als Empfangseinheit aus einem Netzwerk von Referenzstationen 3 nach dem Stand der Technik dargestellt. Sowohl die Rovereinheit 1 als auch die Referenzstationen empfangen Satellitensignale S von Satelliten 2 eines globalen Positionierungssystems. Die im Netzwerk empfangenen Satellitensignale S werden zu einer zentralen Recheneinheit 4 weitergeleitet. Dort erfolgt eine Berechnung von Korrekturen K, wobei die Korrekturen K nachfolgend von einem Sender 5 einer Sendeeinheit an einen Empfänger 1a der Rovereinheit 1 übertragen werden. Die empfangenen Korrekturen K dienen dort zur Erhöhung der Positionsgenauigkeit auf Basis der von einem Satellitenempfänger 1a der Rovereinheit 1 empfangenen Satellitensignale S. Trotz der hier gewählten Darstellung eines Netzwerks mit einem Sender 4 und unidirektionaler Kommunikation ist das erfindungsgemässe Verfahren auch für bidirektionale Kommunikation, sowie für die Nutzung in einzelnen bzw. separierten Stationen ausserhalb eines Netzwerkes anwendbar.

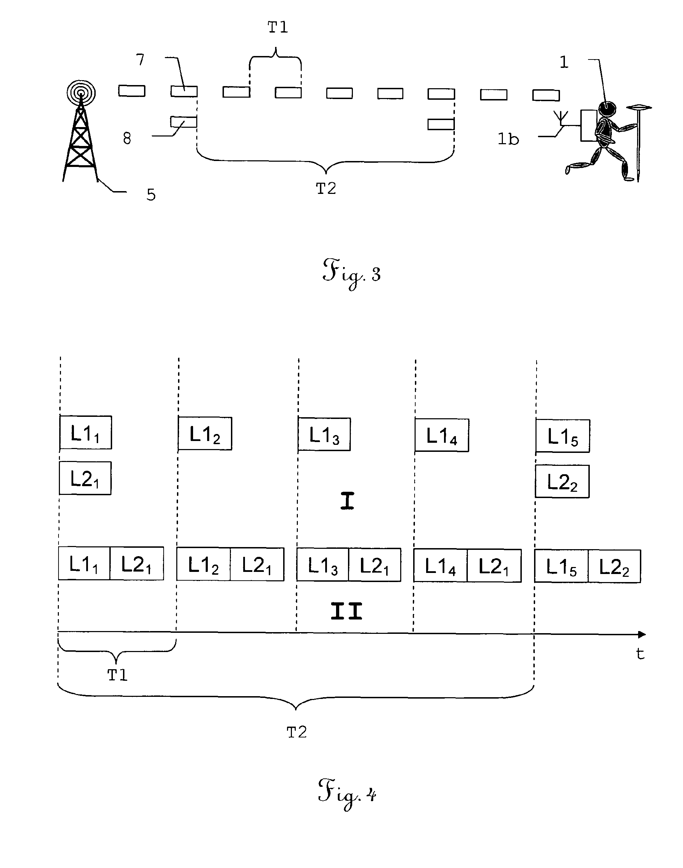

In Fig.2 erfolgt eine schematische Darstellung der Empfangsproblematik bei niedrigstehenden Satelliten 2. Die von den Satelliten 2 ausgesandte Strahlung weist wenigstens eine erste Frequenz 6a mit einer zugeordneten primären Trägerphase und eine zweite Frequenz 6b mit einer zugeordneten sekundären Trägerphase auf. Vom Sender 5 werden für die erste Trägerphase erste Korrektionsdifferenzen und für die zweite Trägerphase zweite Korrektionsdifferenzen ausgesandt bzw. übertragen.

In manchen Anwendungsfällen kann zwar noch der Satellitenempfänger 1a der Rovereinheit die beiden Frequenzen 6a und 6b empfangen, die Referenzstationen 3 des Netzwerks verlieren aber bereits ganz oder teilweise den Empfang des Satellitensignals für eine der Frequenzen, wobei beim derzeitigen Stand der Technik im Regelfall zuerst die niederfrequente zweite Frequenz 6b verloren wird. Zukünftige Änderungen an den Satellitensystemen werden eventuell diese Situation ändern, aber generell müssen nicht beide Signale zeitgleich verloren werden, so dass zumindest ein Signal nutzbar bleibt. Im Falle des Verlustes eines der Signale kann das Netzwerk nicht beide Korrektionsdifferenzen bereitstellen, so dass trotz weiterhin vorhandenem Empfang durch den Satellitenempfänger 1a eine differentielle Positionsbestimmung mit erhöhter Genauigkeit nicht mehr möglich ist.

So ist in solchen Konstellationen z.B. das im GPS-System verwendete L2-Signal schlechter anzumessen, da zur Zeit spezielle Verfahren beim Tracken verwendet werden. Ein solches L2-Signal wird bei niedrigen Elevationen tendenziell früher unter eine kritische Schwelle kommen, an der Probleme mit der Auflösung der Phasenmehrdeutigkeit entstehen. Die Korrektionsdifferenzen basieren jedoch in erster Linie auf zuverlässig, d.h. richtig festgelegten Phasenmehrdeutigkeiten. Bei niederen Elevationen können somit - dispersive und nicht-dispersive - Korrekturen schnell unbrauchbar werden, zumindest soweit diese zum Interpolieren oder Approximieren herangezogen werden.

Jedoch kann erfindungsgemäss auch der Wegfall anderer Trägerphasen bzw. Frequenzen als dem L2-Signal berücksichtigt werden. Gleichfalls können die Übertragungsraten für die Korrekturen je nach Empfangsbedingungen der Rovereinheit oder der Referenzstationen 3 variiert werden. Ist zum Beispiel gegenwärtige L1 die Primärfrequenz für Messungen, so kann in Zukunft nach dem Aufschalten von L2C als zweitem zivilen Code durchaus die primäre Frequenz ein Problem beim Empfang bereiten. Dies kann unter Umständen aber nicht vorher festgelegt werden, so dass eine zeitnahe Anpassung an aktuelle Empfangsbedingungen erforderlich ist. So könnte eine Referenzstation 3 früher das L1-Signal verlieren, hingegen eine andere Referenzstation 3 zuerst das L2-Signal. Erfindungsgemäss wird eine andere Zusammenstellung von dispersiven und nicht-dispersiven Korrektionsdifferenzen in Form der ursprünglichen Trägerphasen abgedeckt. Es spielt keine Rolle, ob nach einem Verlust der ursprünglichen Trägerphasen auf einer oder mehreren Referenzstationen 3 die dispersiven und nicht dispersiven Korrektionsdifferenzen aus der aktuellen L1-Korrektionsdifferenz plus dem veralteten, quasi-stationären, nicht-dispersiven Anteil oder aus der aktuellen L2-(L5-)Korrektionsdifferenz plus dem veralteten quasi-stationären Anteil weitergerechnet werden.

Im Dreifrequenzfall würde vielleicht am Anfang das L1-Signal als primäre Frequenz verwendet und das L2-Signal als sekundäre Frequenz ausgesandt bzw. eine dispersive oder dispersionsfreie Linearkombination. Bei Wegfall des L1-Signals für eine Referenzstation 3 würde auf dieser Stationskombination oder eventuell auf den Kombinationen aller Referenzstationen 3 das L2-Signal als primäre Frequenz verwendet und diese würden eine Korrektionsdifferenz für das L2-Signal zusammen mit einer L5-Korrektionsdifferenz oder einer der Linearkombinationen versenden. Fällt nun auch noch die neue Primärfrequenz und damit die L2-Korrektionsdifferenz auf einer der Stationen aus, so könnte nun die L5-Korrektionsdifferenz mit einer - jetzt - hohen Aktualisierungsrate versenden. Soweit eventuell vorhandene Uhrenoffsets bekannt sind, ist weiterhin eine Approximation oder Interpolation möglich. Somit kann je nach Situation eine Variation der zu übertragenden Korrekturen und der damit verbundenen Raten erfolgen. So könnte durchaus für eine Stationskombination nur noch eine L1-Korrektionsdifferenz versandt werden. Von einer anderen Stationskombination wird nur noch eine L2-Korrektionsdifferenz und von weiteren Stationskombinationen eventuell nur noch andere Korrektionsdifferenzen zur Verfügung gestellt. Da alle Signale immer aus einem dispersiven und einem nicht-dispersiven Anteil bestehen und der quasi-stationäre nicht-dispersive Anteil aus alten Epochen weiter verwendet wird, kann egal welche Frequenz noch auf der Rovereinheit empfangen bzw. getrackt wird, diese aus den anderen Anteilen korrigiert werden.

Fig.3 erläutert das erfindungsgemässe Verfahren durch eine schematische Darstellung. Vom Sender 5 der Sendeeinheit werden die erste Korrektionsdifferenz und eine Korrekturinformation mit unterschiedlichen Raten der Aktualisierung an den Satellitenempfänger 1a der Rovereinheit 1 als Empfangseinheit übertragen. Die erste Korrektionsdifferenz 7 für die erste Frequenz wird mit einer höheren Rate als die Korrekturinformation 8 für die zweite Frequenz aktualisiert. Somit liegt zwischen den Aktualisierungen der ersten Korrektionsdifferenz 7 der erste Zeitraum T1 und zwischen den Aktualisierungen der Korrekturinformation 8 der zweite Zeitraum T2. Für diese Zeiträume werden die jeweiligen Korrekturinformationen 8 als gegeben und damit als quasi-stationär betrachtet. Die erste Rate wird dabei vorteilhafterweise so gewählt, dass der zugeordnete erste Zeitraum T1 der charakteristischen Zeitskala von durch ionosphärische Einflüsse bedingten Veränderungen der elektromagnetischen Strahlung entspricht.

Die zweite Rate wird nun so gewählt, dass deren Inverse, d.h. der zugeordnete zweite Zeitraum T2, der charakteristischen Zeitskala von typischen Veränderungen des dispersionsfreien Anteils entspricht. Während dieses im Vergleich zum ersten Zeitraum T1 längeren zweiten Zeitraumes T2, in dem die Korrekturinformation 8 unverändert bleiben, werden somit die ersten Korrektionsdifferenzen 7 mehrfach aktualisiert. Die Korrekturinformation 8 kann hierbei die Korrektionsdifferenz für die zweite Trägerphase, einen dispersiven oder einen dispersionsbehafteten Anteil als Linearkombinationen der beiden Korrektionsdifferenzen für die beiden Trägerphasen repräsentieren.

Die Berechnung der aktuellen zweiten Korrektionsdifferenz für die sekundäre Trägerphase erfolgt beispielsweise unter Differenzbildung von erster Korrektionsdifferenz 7 und dispersionsfreiem Anteil, wobei der dispersionsfreie Anteil auch aus der ersten Korrektionsdifferenz 7 und der zweiten - quasi-stationären - Korrektionsdifferenz berechnet werden kann, z.B. wenn als Korrekturinformation 8 die zweite Korrektionsdifferenz übertragen wird.

Die Erzeugung eines zugehörigen Datenstrukturproduktes erfolgt senderseitig und setzt nicht notwendigerweise dem Empfang mit exakt der gleichen Rate oder unter Nutzung der Korrektionsdifferenz oder der Korrekturinformation bzw. mit der gleichen Aktualisierungsrate voraus. Unterschiedliche Empfänger 1b können die mit unterschiedlichen Raten ausgesandten Korrektionsdifferenzen bzw. Korrekturinformationen zusätzlich auch mit unterschiedlichen Raten empfangen oder auswerten.

Ein solches Datenstrukturprodukt weist somit eine Folge von Datensätzen auf, welche erste Korrektionsdifferenzen 7 für die primäre Trägerphase und Korrekturinformationen 8 für die sekundäre Trägerphase enthalten, wobei jeder Korrekturinformation 8 zeitlich mehr als eine erste Korrektionsdifferenz 7 zugeordnet ist.

Unter Zugrundelegung der langsameren Veränderung des nicht-dispersiven Anteils können nun aus der Linearkombination der beiden Trägerphasen bzw. der Linearkombination von dispersiven und nicht-dispersiven Anteilen auch für die sekundäre Trägerphase Korrekturen mit höherer Aktualisierungsrate berechnet werden.

Das erfindungsgemässe Verfahren ist auch für mehr als zwei Trägerphasen verwendbar, z.B. indem in einem GPS-System die Korrektionsdifferenzen für das L1-Signal mit höherer Aktualisierungsrate, die für das L2- sowie das eventuell L5-Signal mit einer oder mehreren niedrigeren Aktualisierungsraten ausgesandt werden.

Fig.4 eine schematische Darstellung von zwei Alternativen des erfindungsgemässen Datenstrukturprodukts zur Nutzung bei der Durchführung eines erfindungsgemässen Verfahrens. Gezeigt wird die Aussendung von Korrektionsdifferenzen und Korrekturinformationen aufweisenden Datenformaten gegenüber der Zeitachse t.

In der ersten Variante I werden die ersten Korrektionsdifferenzen $L1_i$ mit unterschiedlichen Wiederholraten unabhängig von den Korrekturinformationen $L2_i$ ausgesandt, so dass das Datenstrukturprodukt aus mindestens zwei getrennten Folgen von Signalen besteht. Wird zu einem Zeitpunkt parallel eine erste Korrektionsdifferenz $L1_1$ und eine Korrekturinformation $L2_1$ ausgesandt, so folgt die nächste aktualisierte erste Korrektionsdifferenz $L1_2$ nach dem kurzen ersten Zeitraum T1, wohingegen die nächste aktualisierte Korrekturinformation $L2_2$ erst nach dem längeren zweiten Zeitraum T2 zeitgleich mit der ersten Korrektionsdifferenz $L1_5$ gesendet wird. Zu diesem Zeitpunkt wurden bereits die weiteren aktualisierten ersten Korrektionsdifferenzen $L1_2$, $L1_3$ und $L1_4$ übermittelt bzw. ausgesendet.

Die zweite Variante II basiert auf der direkt verknüpften und zeitgleichen Aussendung von Korrektionsdifferenzen und Korrekturinformationen für alle Trägerphasen. Mit einem Zeitabstand des ersten Zeitraums T1 wird periodisch ein Signal ausgesendet, das einen jeweils aktualisierten Anteil der ersten Korrektionsdifferenz $L1_i$ und einen Anteil der mit geringerer Rate aktualisierten Korrekturinformation $L2_i$ enthält. Im einfachsten Fall wird innerhalb des längeren zweiten Zeitraums T2 zusammen mit den variierenden $L1_i$ eine innerhalb von T2 unveränderte Korrekturinformation $L2_i$ übertragen, was allerdings hinsichtlich des zu übertragenden Datenvolumens keine Reduzierung bedeuten würde. Statt dessen kann jedoch erfindungsgemäss anstelle der Korrekturinformation selbst auch ein Indikator, z.B. ein Flag, verwendet werden, der als Platzhalter anzeigt, dass der bisherige Wert für $L2_i$ unverändert ist. Nur bei einer Aktualisierung wird eine volle Korrekturinformation L2$_i$ übertragen. Die rein exemplarisch angeführten Datenstrukturprodukte nach Variante I und Variante II unterscheiden sich somit darin, dass in Variante I zwei getrennte Datenformate mit unterschiedlichen Raten ausgesandt werden, wohingegen in Variante II ein Datenformat mit zwei Abschnitten ausgesendet wird, wobei die Abschnitte mit unterschiedlichen Raten aktualisiert werden.

Die dargestellten Ausführungsformen stellen nur Beispiele für erfindungsgemässe Realisierungen dar und sind daher nicht abschliessend und einschränkend zu verstehen. Darüber hinaus kann der Fachmann weitere erfindungsgemässe Ausführungsformen ableiten, z.B. unter Verwendung alternativer Formen der Datenstrukturprodukte bzw. Datenformate. Insbesondere können alternative Anzahlen von Trägerphasen und Aktualisierungscharakteristiken verwendet werden, wobei insbesondere Verfahren mit drei oder mehr Trägerphasen realisierbar sind. Zudem sind in den Beispielen stets Vielfache des ersten Zeitraums für den zweiten Zeitraum angesetzt worden. Erfindungsgemäss können aber auch Aktualisierungsraten gewählt werden, die nicht Vielfache voneinander sind, z.B. durch Verwendung von Primzahlen.

Trotz der gewählten systemspezifischen Beispiele ist das Verfahren grundsätzlich auch für beliebige satellitenbasierte Positionierungssysteme, wie z.B. GPS, Galileo oder GLONASS, erfindungsgemäss verwendbar.

**Patentansprüche**

1.  Verfahren zum Übertragen von Korrekturen (K) für ein satellitenbasiertes Positionierungssystem mit wenigstens einer Sendestation (5) zur Übertragung der Korrekturen (K) an eine Empfangseinheit (1b), insbesondere mit unidirektionaler Kommunikation, wobei

    - die Empfangseinheit (1b) zum Empfang elektromagnetischer Strahlung von wenigstens einem Satelliten (2) des Positionierungssystems eingerichtet ist und die Strahlung wenigstens eine erste Trägerphase (6a) und eine zweite Trägerphase (6b) aufweist, und
    - die Sendestation (5) wenigstens

        o eine erste Korrektionsdifferenz (7) für die erste Trägerphase (6a) und
        o eine Korrekturinformation (8) für die zweite Trägerphase (1b)

    aussendet,
    **dadurch gekennzeichnet, dass**
    die erste Korrektionsdifferenz (7) mit einer ersten Rate und die Korrekturinformation (8) mit einer zweiten Rate aktualisiert werden, wobei erste und zweite Rate unterschiedlich sind.

2.  Verfahren zum Empfang von Korrekturen (K) für ein satellitenbasiertes Positionierungssystem mit wenigstens einer Empfangseinheit (1b) welche Korrekturen (K) von einer Sendestation (5) empfängt, insbesondere mit unidirektionaler Kommunikation, wobei

    - die Empfangseinheit (5) zum Empfang elektromagnetischer Strahlung von wenigstens einem Satelliten (2) des Positionierungssystems eingerichtet ist und die Strahlung wenigstens eine erste Trägerphase (6a) und eine zweite Trägerphase (6b) aufweist, und
    - die Sendestation (5) wenigstens

        o eine erste Korrektionsdifferenz (7) für die erste Trägerphase (6a) und
        o eine Korrekturinformation (8) für die zweite Trägerphase (6b) aussendet,

    **dadurch gekennzeichnet, dass**
    die erste Korrektionsdifferenz (7) mit einer ersten Rate und die Korrekturinformation (8) mit einer zweiten Rate empfangen werden, wobei erste und zweite Rate unterschiedlich sind.

3.  Verfahren nach Anspruch 1 oder 2,
    **dadurch gekennzeichnet, dass**
    der ersten Trägerphase (6a) eine höhere Frequenz als der zweiten Trägerphase (6b) zugeordnet ist.

4.  Verfahren nach einem der vorangehenden Ansprüche,
    **dadurch gekennzeichnet, dass**
    die erste Rate der charakteristischen Zeitskala von durch dispersionsbehaftete Einflüsse bedingten Veränderungen entspricht.

5. Verfahren nach einem der vorangehenden Ansprüche,
   **dadurch gekennzeichnet, dass**
   die zweite Rate der charakteristischen Zeitskala von durch dispersionsfreie Einflüsse bedingten Veränderungen entspricht.

6. Verfahren nach einem der vorangehenden Ansprüche,
   **dadurch gekennzeichnet, dass**
   die erste Rate höher als die zweite Rate ist, insbesondere die ersten Rate 1 Hz und die zweite Rate 0,1 Hz beträgt.

7. Verfahren nach einem der vorangehenden Ansprüche,
   **dadurch gekennzeichnet, dass**

   • die erste Korrektionsdifferenz (7) und eine zweite Korrektionsdifferenz jeweils als Linearkombination

       o eines dispersiven und
       o eines dispersionsfreien Anteils, sowie

   • ein dispersiver und ein dispersionsfreier Anteil jeweils als Linearkombination

       o der ersten Korrektionsdifferenz (7) und
       o der zweiten Korrektionsdifferenz

   modelliert werden, insbesondere gemäss der Gleichungen

$$\delta\Delta\Phi^j_{km,disp} = \frac{f_2^2}{f_2^2 - f_1^2}\delta\Delta\Phi^j_{km,1}$$

$$-\frac{f_2^2}{f_2^2 - f_1^2}\delta\Delta\Phi^j_{km,2}$$

$$\delta\Delta\Phi^j_{km,non\text{-}disp} = \frac{f_1^2}{f_1^2 - f_2^2}\delta\Delta\Phi^j_{km,1}$$

$$-\frac{f_2^2}{f_1^2 - f_2^2}\delta\Delta\Phi^j_{km,2}$$

   wobei

   $\delta\Delta\Phi^j_{km,disp}$ den dispersiven Anteil für die erste Korrektionsdifferenz (7),

   $\delta\Delta\Phi^j_{km,non\text{-}disp}$ den dispersionsfreien Anteil für die erste Korrektionsdifferenz (7),
   $f_1$ die Frequenz der ersten Trägerphase (6a),
   $f_2$ die Frequenz der zweiten Trägerphase (6b),

   $\delta\Delta\Phi^j_{km,1}$ die erste Korrektionsdifferenz (7) und

   $\delta\Delta\Phi^j_{km,2}$ die zweite Korrektionsdifferenz

   bezeichnen, und

wobei

- die zweite Korrektionsdifferenz,
- der dispersionsfreie Anteil oder
- der dispersive Anteil

die Korrekturinformation (8) repräsentiert.

**8.** Verfahren nach Anspruch 7,
**dadurch gekennzeichnet, dass**
die zweite Korrektionsdifferenz für die zweite Trägerphase (6b) unter Differenzbildung von erster Korrektionsdifferenz (7) und dispersionsfreiem Anteil berechnet wird.

**9.** Verfahren nach Anspruch 8,
**dadurch gekennzeichnet, dass**
der dispersionsfreie Anteil aus der ersten Korrektionsdifferenz (7) und der zweiten Korrektionsdifferenz berechnet wird.

**10.** Verfahren nach einem der vorangehenden Ansprüche,
**dadurch gekennzeichnet, dass**
die Sendestation (5) als Teil eines Netzwerks von Referenzstationen (3) betrieben wird, insbesondere eines Netzwerks mit Master- und Auxiliary-Referenz-Stationen.

**11.** Verfahren nach einem der vorangehenden Ansprüche,
 **dadurch gekennzeichnet, dass**
die Korrekturinformation (8) für einen Zeitraum als quasi-stationär betrachtet wird, welcher der Inversen der zweiten Rate entspricht.

**12.** Verfahren nach einem der vorangehenden Ansprüche,
**dadurch gekennzeichnet, dass**
erste und zweite Rate in Abhängigkeit von den Empfangsbedingungen

- der elektromagnetischer Strahlung von wenigstens einem Satelliten (2) und/oder
- der Korrekturen(K)

variiert werden, insbesondere das ordinale Verhältnis von erster und zweiter Rate, gegebenenfalls mehrfach, variiert wird.

**13.** Computerprogrammprodukt mit Programmcode, der auf einem maschinenlesbaren Träger gespeichert oder durch eine elektromagnetische Welle verkörpert ist, zur Durchführung eines der Verfahren nach einem der Ansprüche 1 bis 12, insbesondere wenn das Programm in einem Computer ausgeführt wird.

**14.** Datenstrukturprodukt zur Durchführung eines der Verfahren nach Anspruch 1 bis 12 als Folge von Datensätzen, welche erste Korrektionsdifferenzen (7) für die erste Trägerphase (6a) und/oder Korrekturinformationen (8) für die zweite Trägerphase (6b) aufweisen, wobei jeder Korrekturinformation (8) zeitlich mehr als eine erste Korrektionsdifferenz (7) zugeordnet ist.

Fig. 1

Fig. 2

Fig. 3

Fig. 4

Europäisches
Patentamt

**EUROPÄISCHER RECHERCHENBERICHT**

Nummer der Anmeldung

EP 04 02 6365

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | KEENAN C R ET AL: "Using the information from reference station networks: a novel approach conforming to RTCM V2.3 and future V3.0" IEEE 2002 POSITION LOCATION AND NAVIGATION SYMPOSIUM. (PLANS 2002). PALM SPRINGS, CA, APRIL 15 - 18, 2002, POSITION LOCATION AND NAVIGATION SYMPOSIUM, NEW YORK, NY : IEEE, US, 15. April 2002 (2002-04-15), Seiten 320-327, XP010590522 ISBN: 0-7803-7251-4 * Seite 322 * * Seite 323, linke Spalte * ----- | 1-14 | G01S5/14 |
| A,D | US 5 899 957 A (LOOMIS PETER VAN WYCK) 4. Mai 1999 (1999-05-04) * das ganze Dokument * ----- | 1-14 | |
| A | US 2004/204852 A1 (ROBBINS JAMES E) 14. Oktober 2004 (2004-10-14) * Absatz [0053] - Absatz [0054] * ----- | 1-14 | |

RECHERCHIERTE SACHGEBIETE (Int.Cl.7)

G01S

Der vorliegende Recherchenbericht wurde für alle Patentansprüche erstellt

| Recherchenort | Abschlußdatum der Recherche | Prüfer |
|---|---|---|
| München | 13. Januar 2005 | Dollinger, F |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 02 6365

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 5899957 | A | 04-05-1999 | US<br>WO | 5477458 A<br>9518978 A1 | 19-12-1995<br>13-07-1995 |
| US 2004204852 | A1 | 14-10-2004 | US<br>WO | 2002198657 A1<br>02061449 A1 | 26-12-2002<br>08-08-2002 |

EPO FORM P0461

Für nähere Einzelheiten zu diesem Anhang : siehe Amtsblatt des Europäischen Patentamts, Nr.12/82